# EUROPÄISCHE PATENTSCHRIFT

(11) **EP 3 456 986 B1**
(45) Veröffentlichungstag und Bekanntmachung des Hinweises auf die Patenterteilung: **28.07.2021**
(21) Anmeldenummer: 18194319.2
(22) Anmeldetag: 13.09.2018
(51) Int. Cl.: F16B 5/02, F16B 19/02, F16C 29/00, F16C 29/12, F16B 9/00, F16C 29/02, F16H 25/20, F16B 9/02

(54) **FÜHRUNGSEINHEIT MIT ZWEI PARALLEL UND IM ABSTAND ZUEINANDER ANGEORDNETEN KREISZYLINDERFÖRMIGEN FÜHRUNGSELEMENTEN**
GUIDE UNIT WITH TWO CYLINDER SHAPED GUIDING ELEMENTS PLACED IN PARALLEL AND SPACED FROM EACH OTHER
UNITÉ DE GUIDAGE POURVU DE DEUX ÉLÉMENTS DE GUIDAGE PARALLÈLES, CYLINDRIQUES ET DISPOSÉS À UNE CERTAINE DISTANCE L'UN DE L'AUTRE

(30) Priorität: 19.09.2017 DE 202017105678 U
(43) Veröffentlichungstag der Anmeldung: 20.03.2019
(73) Patentinhaber: RK Rose + Krieger GmbH Verbindungs- und Positioniersysteme, 32423 Minden (DE)
(72) Erfinder: BARGHEER, Jörg, 31715 Meerbeck (DE); BRAUN, Johann, 32369 Rahden (DE)
(74) Vertreter: Kleine, Hubertus

(56) Entgegenhaltungen:
- DE-U1-202012 101 201
- US-A- 4 810 144
- US-A- 5 033 869
- US-A- 5 310 298

## Beschreibung

Die Erfindung betrifft eine Führungseinheit mit zwei parallel und im Abstand zueinander angeordneten kreiszylinderförmigen Führungselementen, die mit Endbereichen in Lagerblöcken montiert sind, wobei die Lagerblöcke Stufenbohrungen aufweisen, in die die Führungselemente mit ihren Endbereichen eingesetzt sind und in denen die Führungselemente mittels einer axial eingreifenden Schraube befestigt sind. Die Führungseinheit weist zumindest einen Führungsschlitten auf, der entlang der Führungselemente verfahrbar ist.

Derartige Führungseinheiten werden als Linearführungen zum Verstellen von Aggregaten oder Komponenten eingesetzt. Sie bilden z.B. eine x-, y-, oder z-Achse eines Verstellsystems. Der genannte Führungsschlitten kann dabei beispielsweise mit Hilfe einer Spindel handbetrieben oder motorisch entlang der Führungselemente verfahren werden. Als Führungselemente können bei derartigen Führungseinheiten Rohre oder Vollmaterial-Stangen eingesetzt werden. Aufgrund des konstruktiven Aufbaus werden derartige Führungseinheiten häufig auch als Doppelsäulenführungen bezeichnet.

Um Produktionstoleranzen der Durchmesser der Führungselemente ausgleichen zu können, ist üblicherweise der Innendurchmesser der Stufenbohrungen größer ausgebildet als der nominelle Außendurchmesser der Führungselemente. Beim Zusammenbau der Führungseinheit werden die axial von außen durch die Stufenbohrungen der Lagerblöcke in die Führungselemente eingeschraubten Befestigungsschrauben zunächst nur leicht angezogen, sodass die beiden Führungselemente in ihrem Abstand zueinander noch variiert werden können. Sodann wird der Führungsschlitten gegen den einen und nachfolgend den anderen Lagerblock gefahren und die Befestigungsschrauben bei anliegendem Führungsschlitten angezogen. Auf diese Weise wird der Abstand der Führungselemente auf beiden Seiten der Führungseinheit angepasst, um eine Schwergängigkeit des Führungsschlittens zu verhindern. Diese Vorgehensweise verkompliziert jedoch die Montage der Führungseinheit. Zudem besteht die Gefahr, dass sich die Führungselemente wieder in den Lagerblöcken verschieben.

Die Druckschrift US 5,033,869 A beschreibt eine Führungseinheit der eingangs genannten Art, bei der zwei Führungsstangen als Führungselemente in Stufenbohrungen von endseitigen Lagerblöcken eingesetzt sind und mit axialen Schrauben befestigt sind. Um den zuvor beschriebenen Einstellvorgang beim Zusammenbau der Führungseinheit zu umgehen, ist der Führungsschlitten entlang einer der beiden Führungsstangen mittels radial festsitzender Gleitbuchsen geführt, wohingegen der Führungsschlitten an der anderen der beiden Führungsstangen in einer schwimmend gelagerten Gleitbuche geführt ist, um während des Betriebs der Führungseinheit Abstandsvariationen, die z.B. durch nicht exakt parallele Führungsstangen entstehen, ausgleichen zu können.

Aus der Druckschrift EP 2 495 463 A2 sind als eine alternative Befestigung der Führungselemente in den Lagerblöcken Spannhülsen bekannt, mit denen die Führungselemente in die Lagerblöcke eingespannt werden. Zum Verspannen der Spannhülsen sind beispielsweise Innengewindegänge in Stufenbohrungen der Lagerblöcke ausgebildet, in die ein Spannring eingeschraubt wird. Insbesondere bei einer Verwendung von Rohren als Führungselementen kann eine derartige, von außen spannende Befestigung jedoch zu einer Deformation der Rohre führen, die die Führungseigenschaften des Führungsschlittens im Endbereich beinträchtigen können.

Die Druckschrift DE 20 2012 101 201 U1 zeigt eine Verwendung einer Toleranzhülse aus geprägtem Profilblech zur Befestigung eines Rohres in einem Kupplungsstück. Die Toleranzhülse kann eine ansonsten verwendete Klebeverbindung zwischen dem Rohr und dem Kupplungsstück ersetzen und sorgt gleichzeitig für eine gewisse Elastizität der Verbindung.

Es ist eine Aufgabe der vorliegenden Erfindung, eine eingangs genannte Führungseinheit so zu verbessern, das sie bei einfachem Aufbau leicht montierbar ist und ohne besondere Einstellarbeiten bei der Montage gute Führungseigenschaften zeigt. Dabei soll sowohl der Einsatz von Rohren, als auch von Vollmaterial-Stangen als Führungselemente möglich sein.

Diese Aufgabe wird durch eine Führungseinheit mit den Merkmalen des unabhängigen Anspruchs gelöst. Vorteilhafte Ausgestaltungen und Weiterbildungen sind Gegenstand der abhängigen Ansprüche.

Eine erfindungsgemäße Führungseinheit zeichnet sich dadurch aus, dass radial um die Endabschnitte der Führungselemente jeweils eine in ihre radialen Abmessungen variable Toleranzhülse in die Stufenbohrungen eingesetzt ist.

Die Toleranzhülse ermöglicht einen Toleranzausgleich zwischen dem Führungselement und den Stufenbohrungen und zentriert dabei die Führungselemente in den Stufenbohrungen, so dass sie auch ohne einen komplizierten Einstellvorgang den korrekten und für den Führungsschlitten benötigten Abstand aufweisen.

In einer vorteilhaften Ausgestaltung der Führungseinheit ist die Toleranzhülse aus einem gewellten Blechmaterial gefertigt. Wellen der Toleranzhülse verlaufen dabei bevorzugt axial. Eine derartige Toleranzhülse ist kostengünstig und leicht in verschiedenen Abmessungen herstellbar. Die Wellenstruktur ist in radialer Richtung komprimierbar und gleicht so einen umlaufenden Spalt zwischen der Außenfläche der Führungselemente und der Innenfläche der Stufenbohrung umlaufend gleichmäßig aus.

In einer weiteren vorteilhaften Ausgestaltung der Führungseinheit werden Rohre als Führungselemente eingesetzt, wobei in die Endabschnitte Gewindeeinsätze eingesetzt sind. Rohre sind im Hinblick auf ihr Gewicht und die Materialkosten vorteilhafter als Vollmaterial-Stangen, wobei durch den erfindungsgemäßen Einsatz der Toleranzhülsen das bislang bestehende Problem einer größeren Produktionstoleranz im Durchmesser der Rohre gelöst ist.

Bevorzugt weisen die Gewindeeinsätze jeweils eine zentrale Gewindehülse auf, in die die axialen Befestigungsschrauben eingeschraubt werden. Von der Gewindehülse steht mindestens ein Flügel geneigt ab, der nach einem Eindrücken des Gewindeeinsatzes in das Rohr als Widerhaken wirkt und die Gewindehülse im Rohr befestigt. Die Gewindeeinsätze können so leicht montiert werden, ohne dass eine zusätzliche mechanische Bearbeitung des Endabschnitts des Rohrs erfolgen muss. Es braucht beispielsweise kein Gewinde in das Rohr geschnitten zu werden. Besonders bevorzugt sind mehrere der Flügel in mindestens zwei Ebenen an der Gewindehülse angeordnet, wodurch der Gewindeeinsatz sich automatisch axial korrekt im Rohr ausgerichtet und hohe axiale Kräfte aufnehmen kann.

In einer weiteren vorteilhaften Ausgestaltung der Führungseinheit sind in den Stufenbohrungen radial umlaufend Vertiefungen ausgebildet, in die die Toleranzhülsen eintauchen. Auf diese Weise wird ein Herausrutschen der Toleranzhülsen aus den Stufenbohrungen auch bei einer Demontage der Führungseinheit verhindert.

Die Erfindung wird nachfolgend anhand eines Ausführungsbeispiels mit Hilfe von Figuren näher erläutert. Die Figuren zeigen:
- Fig. 1: eine isometrische Übersichtsdarstellung einer Führungseinheit mit Führungsschlitten;
- Fig. 2: eine isometrische Explosionsdarstellung der Führungseinheit aus Fig. 1;
- Fig. 3: eine Detaildarstellung eines Endbereichs der Führungseinheit gemäß Fig. 2; und
- Fig. 4: eine Schnittdarstellung des Endbereichs der Führungseinheit.

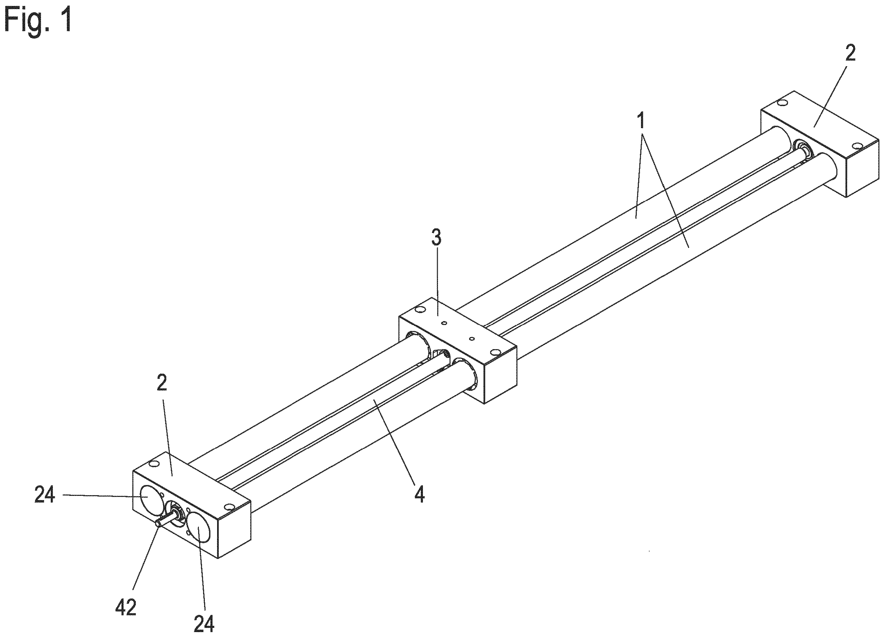

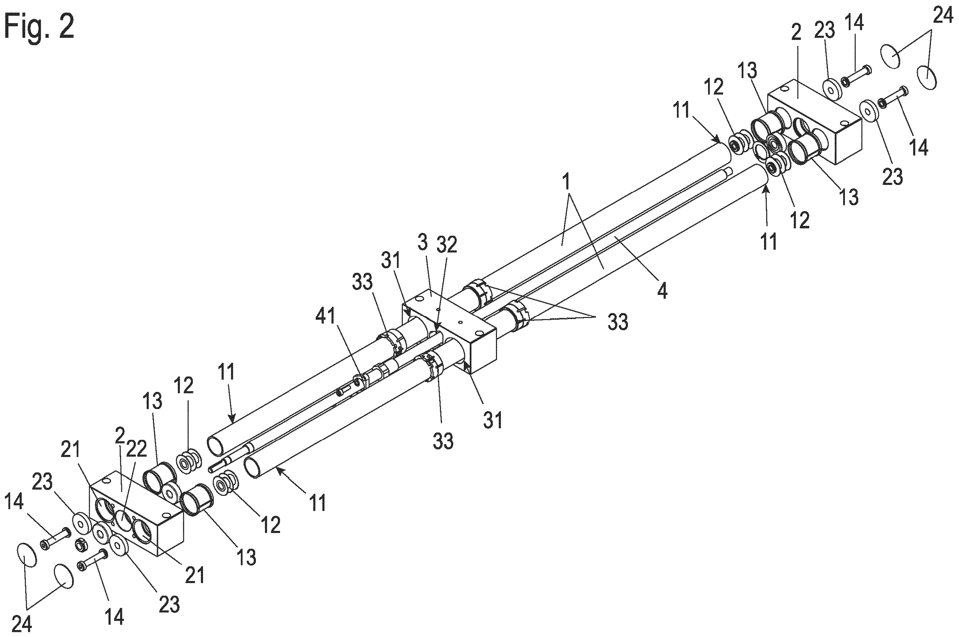

Fig. 1 zeigt in einer isometrischen Gesamtansicht ein Ausführungsbeispiel einer Führungseinheit. In Fig. 2 ist die Führungseinheit der Fig. 1 in einer isometrischen Explosionsdarstellung wiedergegeben, um ihren Aufbau besser verdeutlichen zu können.

Die Führungseinheit ist als sogenannte Doppelsäulenführung aufgebaut und umfasst zwei kreiszylinderförmige Führungselemente 1, die mit Endabschnitten 11 in Lagerblöcken 2 befestigt sind. Die Führungselemente 1 sind beabstandet voneinander und parallel zueinander ausgerichtet. Auf den Führungselementen 1 ist ein Führungsschlitten 3 linear verfahrbar gelagert, der somit zwischen den beiden Lagerblöcken 2 verfahren werden kann. Bei dem dargestellten Ausführungsbeispiel ist ein Spindelantrieb mit einer Spindel 4 vorgesehen, die parallel zu und zwischen den Führungselementen 1 angeordnet ist. Die Spindel ist drehbar in den Lagerblöcken 2 gelagert, wobei sie über einem aus den Lagerblöcke 2 nach außen hervorstehenden Zapfen 42 gedreht werden kann, um den Führungsschlitten 3 zu verfahren. Die Spindel kann dabei händisch oder von einer beispielsweise elektrischen Antriebseinheit betätigt werden.

In Fig. 2 ist die Lagerung des Führungsschlittens 3 deutlicher zu erkennen. Durch den Führungsschlitten 3 führen zwei Bohrungen 31, durch die die beiden Führungselemente 1 geführt sind. Weiter ist eine Spindelbohrung 32 in den Führungsschlitten 3 eingebracht, durch die die Spindel 4 führt. In die Bohrungen 31 sind Gleitbuchsen 33 eingesetzt, durch die der Führungsschlitten 3 möglichst spielfrei entlang der Führungselemente 1 gleitet. In die Spindelbohrung 32 ist ein Spindelmuttereinsatz 41 eingesetzt, um eine Drehung der Spindel 4 in eine Linearbewegung des Führungsschlittens 3 umzusetzen. Die Spindel 4 selbst ist den Lagerblöcken 2 in Lagerbohrungen 22 mit Hilfe von eingesetzten Lagern 43 drehbar gelagert. Die Lager 43 sind Gleit- oder bevorzugt Wälzkörperlager. Axial ist die Spindel 3 über eine aufgeschraubte selbstsicherende Mutter 44 festgelegt.

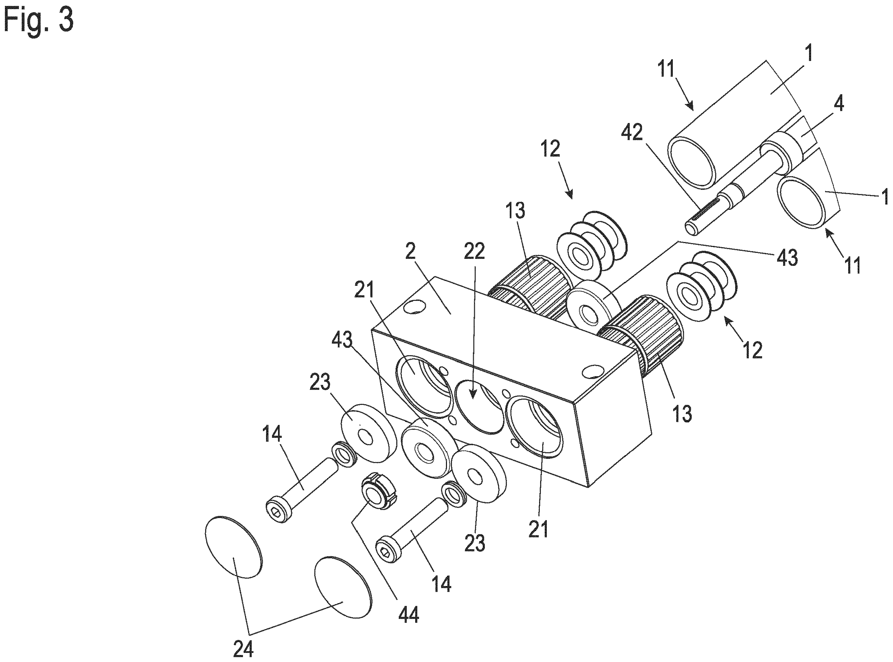

Fig. 3 ist eine isometrische Detaildarstellung eines Endbereichs der Führungseinheit in einer isometrischen Explosionsdarstellung wie in Fig. 2.

Anmeldungsgemäß sind die Endabschnitte 11 der Führungselemente 1 mit Hilfe von Toleranzhülsen 13 in Stufenbohrungen 21 der Lagerblöcke 2 befestigt. Die Stufenbohrung 21 ist so ausgebildet, dass sie auf der inneren Seite des Lagerblocks 2, d. h. auf der zum Führungsschlitten 3 hinweisenden Seite, die Toleranzhülse 13 und den Endabschnitt 11 des entsprechenden Führungselements 1 aufnehmen kann. Zumindest ein Rand des Führungselements 1 liegt an einer Stufe innerhalb der Stufenbohrung 21 am Lagerblock 2 an, so dass die Tiefe, bis zu der das Führungselement 1 in den Lagerblock 2 eingesteckt werden kann, festgelegt ist.

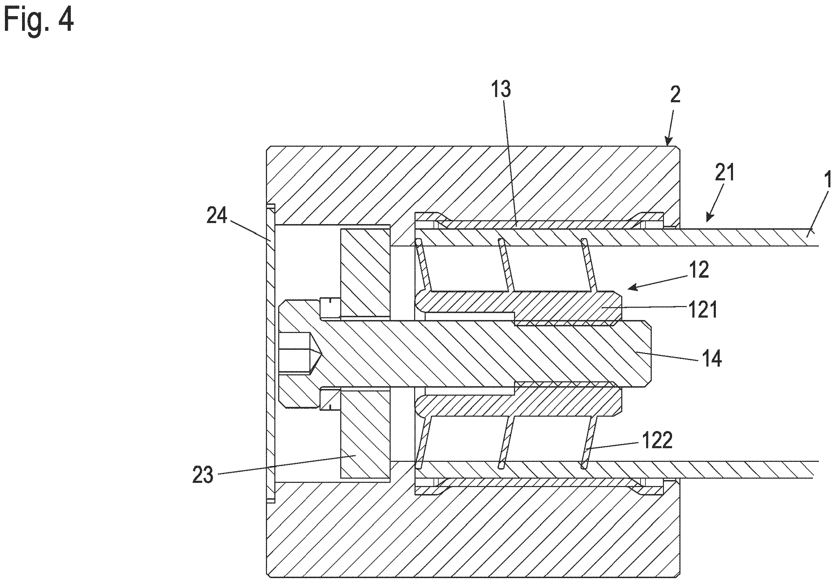

Fig. 4 zeigt eine Schnittdarstellung durch die Stufenbohrung 21, in der das eingesetzte Führungselement 1 und sein Anschlag an der Stufe der Stufenbohrung 21 gut zu erkennen ist.

Die Toleranzhülse 13 ist in der Lage, Produktionstoleranzen im Durchmesser des Führungselements 1 und/oder Toleranzen im Durchmesser der Stufenbohrung 21 auszugleichen. Dabei erfolgt dieser Ausgleich radial umlaufend in homogener Weise, so dass das Führungselement 1 trotz eventueller Durchmessertoleranzen zentriert in der Stufenbohrung 1 positioniert ist.

Die Toleranzhülse 13 kann beispielsweise ein Ring aus gewelltem Blechmaterial sein, wobei die Wellen in axialer Richtung ausgebildet sind. Während die Übersichtszeichnung der Fig. 2 die Toleranzhülse 13 nur schematisch zeigt, ist in der Detailzeichnung der Fig. 3 eine derartige Toleranzhülse 13, die aus einem gewelltem Blechmaterial gefertigt ist, wiedergegeben. Die Wellenstruktur des gewellten Blechmaterials kann in radialer Richtung komprimiert werden, wodurch unterschiedlich große Spalte zwischen der Außenfläche der Führungselemente 1 und der Innenfläche der Stufenbohrung 21 umlaufend gleichmäßig ausgeglichen werden.

Wie insbesondere aus Fig. 4 ersichtlich ist, ist der Rand der Stufenbohrung 21 profiliert indem er Vertiefungen aufweist, um die eingesetzte Toleranzhülse 13 gegen ein Herausrutschen zu sichern.

Nach dem Einsetzen der Führungselemente 1 in die jeweilige zuvor in der Stufenbohrung 21 positionierte Toleranzhülse 13 wird das Führungselement durch eine zentral und axial eingeschraubte Befestigungsschraube 14 im Lagerblock 2 befestigt. Die Befestigungsschraube 14 ist zu diesem Zweck durch eine Scheibe 23 geführt, die von der Außenseite in die Stufenbohrung 21 eingesetzt ist und ebenfalls auf einer Anschlagstufe aufliegt. Die Scheibe 23 ist im Durchmesser etwas kleiner als die Stufenbohrung 21 in diesem Bereich, so dass radial ein Spielraum für die Position der Scheibe 23 gegeben ist. Anstelle einer eingesetzten Schreibe 23 könnte die Stufenbohrung auch so ausgebildet sein, dass die Befestigungsschraube 14 durch eine Bohrung im Vollmaterial des Lagerblocks 2 geführt ist. Der Bereich des Schraubenkopfs der Befestigungsschraube 14 ist zum Schutz vor Verschmutzung durch eine Abdeckung 24 abgedeckt.

Die dargestellte Befestigungsweise der Führungselemente 1 in dem Lagerblock 2 kann sowohl mit einem aus einem Vollmaterial gefertigten Führungselement erfolgen, also einer Vollmaterial-Stange, als auch mit einem Führungselement 1, das, wie im dargestellten Ausführungsbeispiel, aus einem Rohrmaterial gefertigt ist.

Bei Verwendung einer Vollmaterial-Stange als Führungselement wird zentral und axial ein Gewinde eingeschnitten, in das die Befestigungsschraube 14 eingreift.

Bei Verwendung eines Rohrs als Führungselement 1 wird ein Gewindeeinsatz 12 verwendet, der in das Führungselement 1 eingeschoben wird und zentral eine Gewindehülse 121 zum Einschrauben der Befestigungsschraube 14 bereitstellt. Vorteilhaft weist der Gewindeeinsatz 12 radial abstehende Flügel 122 auf, die in Einschubrichtung leicht geneigt von der zentralen Gewindehülse 121 abstehen. Die Flügel 122 wirken wie Widerhaken und verhindern nach einem Einpressen des Gewindeeinsatzes 12 in das Führungselement 1 ein Herausrutschen des Gewindeeinsatzes 12 auch bei axialer Zugbelastung durch die eingeschraubte Befestigungsschraube 14.

Vorteilhaft kann ein derartiger Gewindeeinsatz 12 auch bei variierenden Innendurchmessern der verwendeten rohrförmigen Führungselemente 1 eingesetzt werden. Er ist zudem gewichtssparend und kostengünstig. Alternativ ist auch die Verwendung eines eingeschraubten Gewindeeinsatzes möglich, der mit einem ggf. selbstschneidenden Außengewinde in das rohrförmige Führungselement 1 eingedreht wird.

### Bezugszeichen

- 1: Führungselement
- 11: Endabschnitt
- 12: Gewindeeinsatz
- 121: Gewindehülse
- 122: Flügel
- 13: Toleranzhülse
- 14: Befestigungsschraube

- 2: Lagerblock
- 21: Stufenbohrung
- 22: Lagerbohrung
- 23: Scheibe
- 24: Abdeckung

- 3: Führungsschlitten
- 31: Bohrung
- 32: Spindelbohrung
- 33: Gleitbuchse

- 4: Spindel
- 41: Spindelmuttereinsatz
- 42: Zapfen
- 43: Lager
- 44: selbstsichernde Mutter

## Patentansprüche

1. Führungseinheit mit zwei parallel und im Abstand zueinander angeordneten kreiszylinderförmigen Führungselementen (1), die mit Endabschnitten (11) in Lagerblöcken (2) montiert sind, wobei die Lagerblöcke (2) Stufenbohrungen (21) aufweisen, in die die Führungselemente (1) mit ihren Endbereichen eingesetzt sind und in denen die Führungselemente (1) mittels axial eingreifender Befestigungsschrauben (14) befestigt sind, sowie einem Führungsschlitten (3), der entlang der Führungselemente (1) verfahrbar ist, **dadurch gekennzeichnet, dass**
radial um die Endabschnitte (11) der Führungselemente (1) jeweils eine in ihren radialen Abmessungen variable Toleranzhülse (13) in die Stufenbohrungen (21) eingesetzt ist.

2. Führungseinheit nach Anspruch 1, bei der die Toleranzhülse (13) aus einem gewellten Blechmaterial gefertigt ist.

3. Führungseinheit nach Anspruch 1 oder 2, bei der die Führungselemente (1) Rohre sind, wobei in die Endabschnitte (11) Gewindeeinsätze (12) eingesetzt sind.

4. Führungseinheit nach Anspruch 3, bei der die Gewindeeinsätze (12) jeweils eine zentrale Gewindehülse (121) aufweisen, von der mindestens ein Flügel (122) geneigt absteht.

5. Führungseinheit nach Anspruch 4, bei der mehrere der Flügel (122) in mindestens zwei Ebenen an der Gewindehülse (121) angeordnet sind.

6. Führungseinheit nach einem der Ansprüche 1 bis 5, bei der in den Stufenbohrungen (21) radial umlaufend Vertiefungen ausgebildet sind, in die die Toleranzhülsen (13) eintauchen.

## Claims

1. Guide unit having two circular-cylindrical guide elements (1) which are arranged parallel to and at a distance from one another and are mounted with end sections (11) in bearing blocks (2), wherein the bearing blocks (2) comprise stepped bores (21) into which the guide elements (1) are inserted with their end regions and in which the guide elements (1) are fastened by means of axially engaging fastening screws (14), as well as a guide carriage (3) which is movable along the guide elements (1), **characterized in that**
a tolerance sleeve (13), variable in its radial dimensions, is inserted in each case into the stepped bores (21) radially around the end sections (11) of the guide elements (1).

2. Guide unit according to claim 1, in which the tolerance sleeve (13) is made of a corrugated sheet material.

3. Guide unit according to claim 1 or 2, in which the guide elements (1) are tubes, wherein threaded inserts (12) are inserted into the end sections (11).

4. Guide unit according to claim 3, in which the threaded inserts (12) each have a central threaded sleeve (121) from which at least one wing (122) projects at an angle.

5. Guide unit according to claim 4, in which a plurality of the wings (122) are arranged in at least two planes on the threaded sleeve (121).

6. Guide unit according to one of claims 1 to 5, in which recesses are formed radially circumferentially in the stepped bores (21), into which recesses the tolerance sleeves (13) are immersed.

## Revendications

1. Unité de guidage comportant deux éléments de guidage (1) cylindriques circulaires, disposés parallèlement et à distance l'un de l'autre, qui sont montés par des parties d'extrémité (11) dans des blocs de support (2), les blocs de support (2) présentant des alésages étagés (21) dans lesquels les éléments de guidage (1) sont insérés par leurs zones d'extrémité et dans lesquels les éléments de guidage (1) sont fixés au moyen de vis de fixation (14) s'engageant axialement, et comportant un chariot de guidage (3) qui est déplaçable le long des éléments de guidage (1), **caractérisée en ce que**
radialement autour de chacune des parties d'extrémité (11) des éléments de guidage (1), une douille de tolérance (13), variable dans ses dimensions radiales, est insérée dans les alésages étagés (21).

2. Unité de guidage selon la revendication 1, dans laquelle la douille de tolérance (13) est constituée d'un matériau en tôle ondulée.

3. Unité de guidage selon la revendication 1 ou 2, dans laquelle les éléments de guidage (1) sont des tubes, des inserts filetés (12) étant insérés dans les parties d'extrémité (11).

4. Unité de guidage selon la revendication 3, dans laquelle les inserts filetés (12) présentent chacun une douille filetée centrale (121) de laquelle au moins une ailette (122) fait saillie de manière inclinée.

5. Unité de guidage selon la revendication 4, dans laquelle plusieurs desdites ailettes (122) sont disposées dans au moins deux plans sur la douille filetée (121).

6. Unité de guidage selon l'une des revendications 1 à 5, dans laquelle des évidements sont formés de manière radialement périphérique dans les alésages étagés (21), dans lesquels pénètrent les douilles de tolérance (13).
